# EUROPÄISCHE PATENTANMELDUNG

(11) **EP 4 718 772 A2**
(43) Veröffentlichungstag der Anmeldung: **01.04.2026**
(21) Anmeldenummer: 26156966.9
(22) Anmeldetag: 22.02.2022
(51) Int. Cl.: H04L 9/32

(54) **QUANTENBASIERTE KRYPTOGRAPHIE**

(30) Priorität: 26.02.2021 DE 102021104736
(62) Teilanmeldung aus: 22711908.8
(71) Anmelder: Bundesdruckerei GmbH, 10969 Berlin (DE)
(72) Erfinder: Wilke, Andreas, 13509 Berlin (DE); Komarov, Ilya, 13507 Berlin (DE); Paeschke, Manfred, 16348 Wandlitz (DE)
(74) Vertreter: Richardt Patentanwälte PartG mbB

(57) **Zusammenfassung**

Die Erfindung betrifft ein Verfahren zum Verwenden eines Quantencomputersystems (100) für eine kryptographische Anwendung. Es werden mehrere Qubits (102) in jeweils individuellen Zwischenzuständen. Zum Präparieren der Qubits (102) wird eine Präparierungsvorrichtung (104) des Quantencomputersystems (100) verwendet wird, welche unter Verwendung eines Satzes von ein oder mehreren Steuerparametern gesteuert wird. Die präparierten Qubits werden ausgelesen und das Ausleseergebnis der präparierten Qubits (102) wird als Code für die kryptographische Anwendung verwendet.

## Beschreibung

Die Erfindung betrifft ein Verfahren zum Verwenden eines Quantencomputersystems für eine kryptographische Anwendung sowie ein für diese Verwendung konfiguriertes Quantencomputersystem.

Quantencomputer werden vielerseits als eine der entstehenden Schlüsseltechnologien des 21. Jahrhunderts angesehen. Bei der Entwicklung von Quantencomputern wurden in den letzten Jahren weitreichende Fortschritte erzielt und erste Quantencomputer werden bereits für öffentliche Nutzungen, wenn auch vorwiegend für Forschungs- und Entwicklungszwecke, bereitgestellt.

Da im Falle klassischer Computer bei bestimmten Rechenaufgaben mit zunehmender Anzahl an Möglichkeiten der Rechenbedarf exponentiell ansteigt, während der Rechenbedarf im Falle eines Quantencomputers lediglich linear oder annährend linear anteigt, ist zu erwarten, dass Quantencomputer klassischen (Super-)Computern bei der Lösung solcher Rechenaufgaben deutlich überlegen sind. Beispiele für solche Rechenaufgaben sind der Shor-Algorithmus, welcher eine Primfaktorzerlegung zum Gegenstand hat, oder der Grover-Algorithmus, welcher eine Suche in riesigen unsortierten Datenmengen betrifft.

Im Hinblick auf die Kryptographie ist beispielsweise der Shor-Algorithmus von Bedeutung, da dieser ein Auffinden nichttrivialer Teiler in polynomieller Laufzeit ermöglicht, während klassische Algorithmen auf klassischen Computern hierfür eine zwar subexponentielle, aber dennoch deutlich höher als polynomielle Laufzeit benötigen. Dies kann beispielsweise die Sicherheit heute verwendeter kryptographischer Anwendungen, wie etwa RSA-Kryptosystemen und/oder Verfahren, die auf dem diskreten Logarithmus in endlichen Körpern beruhen, z. B. DSA oder Diffie-Hellman, ebenso wie kryptographische Verfahren basierend auf elliptische Kurven, in Frage stellen. Die Sicherheit solcher kryptographischen Anwendungen, wie etwa RSA-Kryptosystemen, basiert auf der Annahme, dass keine Faktorisierungsverfahren mit polynomieller Laufzeit existieren. Sollte es durch eine Ausnutzung quantenmechanischer Phänomene mittels eines Quantencomputers möglich sein, entsprechende Berechnungen signifikant schneller auszuführen, könnte dies Sicherheit entsprechender heute genutzter Verfahren diskreditieren.

Der Erfindung liegt daher die Aufgabe zugrunde, einen Ansatz für verbesserte kryptographischen Verfahren und Systeme bereitzustellen.

Die US 8 897 449 B1 beschreibt Quantencomputing-Verfahren und -Systeme, bei denen ein Computergerät einen verschlüsselten Zustand von einem anderen Gerät empfängt. Der verschlüsselte Zustand wird in einem Quantenregister gespeichert und eine Folge von Operationen wird auf den verschlüsselten Zustand im Quantenregister angewendet. Die Folge von Operationen umfasst eine Operation, die durch eine Steuernachricht von dem anderen Gerät parametrisiert ist. Durch Anwenden der Folge von Operationen wird der Zustand des Quantenregisters und eines Hilfsquantensystems manipuliert. Das Hilfsquantensystem ist ein aus vier spezifischen Quantenzuständen ausgewähltes Qubit. Durch Anwenden der Folge von Operationen werden Informationen zur Aktualisierung des Verschlüsselungsschlüssels erzeugt. Das Computergerät sendet einen verschlüsselten Ausgabezustand und die Nachricht zur Aktualisierung des Verschlüsselungsschlüssels an das andere Gerät.

Die US 2020/387821 A1 beschreibt eine Authentifizierung basierend auf einer Zustandsänderung eines Qubits. Ein klassisches Computersystem erhält eine Anfrage zum Zugriff auf eine verwaltete Ressource von einem Computergerät, das einem Benutzer zugeordnet ist. Das klassische Computersystem greift auf eine Zugriffsrichtlinie zu, die eine oder mehrere Voraussetzungen für den Zugriff auf die verwaltete Ressource vorgibt. Die Zugriffsrichtlinie identifiziert ein Qubit in einem Quantencomputersystem und eine Änderung des Zustands des Qubits als Voraussetzung für die Gewährung des Zugriffs auf die verwaltete Ressource. Das klassische Computersystem stellt fest, dass die Zustandsänderung des Qubits stattgefunden hat, und gewährt in Antwort auf die Feststellung, dass die Zustandsänderung des Qubits stattgefunden hat, dem Computergerät Zugriff auf die verwaltete Ressource.

Der Artikel "Source-Independent Quantum Random Number Generation", von Cao Zhu et al. in PHYSICAL REVIEW X, Band 6, Nummer 1 vom 27. Februar 2016 beschreibt ein quellenunabhängiges Schema zur Generierung von Quantenzufallszahlen, bei dem die Ausgabezufälligkeit zertifiziert werden kann, selbst wenn die Quelle nicht charakterisiert und nicht vertrauenswürdig ist. Im Grenzfall großer Datenmengen ist die Länge des eingegebenen Zufallsstartwerts im Vergleich zu der des ausgegebenen Zufallsbits exponentiell klein.

US 10 728 029 B1 beschreibt ein Verfahren, wobei auf Basis von dekodierten Qubits ein Sitzungsschlüssel generiert wird, der zur Authentifizierung von Sitzungen verwendet wird.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Verwenden eines Quantencomputersystems, welcher eine Mehrzahl von Qubits umfasst, für eine kryptographische Anwendung. Das Verfahren umfasst im Zuge des Ausführens der kryptographischen Anwendung:
Präparieren mehrere der Qubits in jeweils individuellen Zwischenzuständen, wobei zum Präparieren der Qubits eine Präparierungsvorrichtung des Quantencomputersystems verwendet wird, welche unter Verwendung eines Satzes von ein oder mehreren Steuerparametern gesteuert wird,
Auslesen der präparierten Qubits,
Verwenden des Ausleseergebnisses der präparierten Qubits als Code für die kryptographische Anwendung.

Ausführungsformen können den Vorteil haben, dass für die kryptographische Anwendung ein Code bzw. eine Information verwendet wird, welche basierend auf quantenmechanischen Phänomenen erzeugt wurde. Allgemein gilt, dass sich die Quantenüberlegenheit, d.h. die Überlegenheit von Quantencomputern gegenüber klassischen Supercomputern, im Kern darauf basiert, dass Quantencomputer im Gegensatz zu klassischen Computern auf quantenmechanische Prinzipien verwenden. Quantenmechanische Phänomene, welche hierbei genutzt werden, umfassen beispielsweise eine Superposition, also eine Überlagerung von Zuständen der Qubits, und/oder eine Quantenverschränkungen von Qubits. Die so genutzten quantenmechanischen Prinzipien ermöglichen es, dass Quantencomputer bestimmte Rechenaufgaben schneller zu lösen vermögen, als klassische Computer, welche die entsprechenden Rechenaufgaben ohne Ausnutzung diese quantenmechanischen Prinzipien lösen. Die Überlegenheit ergibt sich also aus einer Ausnutzung unterschiedlicher physikalischer Phänomene. Werden nun für eine kryptographische Anwendung, wie hier vorgeschlagen ebenfalls quantenmechanische Phänomene verwendet, so fällt der Vorteil eines Ausnutzens anderer physikalischer Ansätze aus. Soll ein quantenmechanisches System mittels eines anderen quantenmechanischen Systems nachgestellt bzw. simuliert werden, ergibt sich dabei kein grundlegender physikalischer Vorteil, wie es etwa von Quantencomputern gegenüber klassischen Computern der Fall ist.

Ausführungsformen können mithin den Vorteil haben, dass kryptographische Anwendungen, welche sich ebenso wie das Quantencomputersystem grundlegende quantenmechanische Phänomene zu Nutzen machen, selbst im Zeitalter von Quantencomputern ein ausreichendes Maß an Sicherheit bereitzustellen vermögen.

Wollte man beispielsweise bestimmen, welche Kombination von Steuerparametern und Ausgangszuständen der Qubits zu einem bestimmten Code führt, müssten selbst bei der Verwendung eines Quantencomputersystems alle möglichen Kombinationen nacheinander durchprobiert werden, bis eine Übereinstimmung zwischen den resultierenden Ausleseergebnis und dem entsprechenden Code gefunden wird. Hinzu kommt, dass identische Steuerparameter selbst bei Verwendung baugleicher Quantencomputersysteme zu unterschiedlichen Ergebnissen führen können. Bei Quantencomputersystemen handelt es sich, selbst wenn man von den Qubits und deren quantenmechanischen Eigenschaften absieht, um hochkomplexe Geräte, welche realistischer Weise nicht absolut identisch geklont werden können. Zwar können baugleiche Quantencomputersysteme so eingestellt und gesteuert werden, dass sie für identische Rechnungen identische Ergebnisse liefern, hierfür ist es aber beispielsweise notwendige die Quantencomputersysteme jeweils individuelle zu kalibrieren. Im Ergebnis ist es im Allgemeinen mithin nicht möglich einfach Steuerparameter einer ersten Präparierungsvorrichtung eines ersten Quantencomputersystems zur Steuerung einer zweiten Präparierungsvorrichtung eines zweiten Quantencomputersystems zu verwenden, ohne etwa unterschiedliche Kalibrierungen und Ähnliches zu berücksichtigen. Mit anderen Worten kann der Zusammenhang zwischen Steuerparameter und resultierendem Ausleseergebnis bei identischen Ausgangszuständen der Qubits charakteristisch für ein individuelles Quantencomputersystem sein.

Ein Quantencomputer bzw. ein Quantencomputersystem ist ein Computersystem, welches einen Quantenprozessor umfasst, d.h. einem Prozessor, dessen Funktion auf den Gesetzen der Quantenmechanik beruht bzw. diese gezielt ausnutzt. Hierfür umfasst der Quantenprozessor eine Mehrzahl von Qubits.

Ein Qubit bezeichnet ein beliebig manipulierbares Zweizustands-Quantensystem. Ein Zustand eines Qubits, d.h. eines Systems mit zwei orthogonalen Basiszuständen |0〉 und |1〉 eines zweidimensionalen komplexen Raums, ergibt sich zu |Ψ〉 = c₀|0〉 + c₁|1〉, wobei beliebige Überlagerungszustände zugelassen sind. Hierbei sind c₀ und c₁ komplexe Zahlen. Zur Normierung wird gefordert |c₀|² + |c₁|² = 1. Ohne Beschränkung der Allgemeinheit kann beispielsweise c₀ reell und nichtnegativ gewählt werden. Das Qubit wird in der Regel ausgelesen, in dem man eine in der Basis {|0〉, |1〉} diagonale und nicht entartete Observable misst, also z. B. A = |1〉〈1|. Die Wahrscheinlichkeit dafür, als Resultat einer Messung am Zustand |Ψ〉 den Wert 0 zu erhalten, beträgt P(0) = |〈0|Ψ〉|² = |c₀|². Die Wahrscheinlichkeit dafür, als Resultat einer Messung am Zustand |Ψ〉 den Wert 1 zu erhalten, beträgt demgegenüber P(1) = |c₀|² = 1-P(0).

Ein Zustand, bei dessen Vorliegen vor der Messung der Messwert mit absoluter Sicherheit vorhergesagt werden kann, wird als sogenannten Eigenzustände der Messung bzw. der gemessenen Observablen bezeichnet. Nach jeder Messung liegt ein zum erhaltenen Messwert zugehöriger Eigenzustand des Qubits vor. Liegt bereits vor der Messung ein Eigenzustand der Messung vor, so wird dieser Eigenzustand im Zuge der Messung nicht verändert.

Ein Qubit kann durch Überlagerungen auch andere Zustände als die Basiszuständen |0〉 und |1) annehmen, d.h. Zwischenzustände oder Superpositionszustände |Ψ〉 = c₀|0〉 + c₁ |1〉 mit c₀, c₁ ≠ 0, c₀, c₁ ≠ 1.

Qubits können in unterschiedlichen Formen implementiert sein, beispielsweise in Form von Ionen in lonenfallen, in Form von Elektronen in Quantenpunkten, in Form von SQUIDs, in Form von Kernspins von Molekülen oder Festkörpern oder in Form photonischer Qubits.

Zum Präparieren bzw. Manipulieren der Qubits ist eine physikalische Wechselwirkung mit diesen notwendig, durch welche die Zustände der Qubits jeweils kontrolliert bzw. kontrolliert miteinander gekoppelt werden können. Diese physikalische Wechselwirkung erfolgt unter Verwendung einer Präparierungsvorrichtung des Quantencomputersystems, welche von einer Steuervorrichtung gesteuerte wird. Die Art der zu verwendenden physikalischen Wechselwirkung und damit der Aufbau der Präparierungsvorrichtung hängt von der Art des als Qubits verwendeten Zweizustands-Quantensystems ab. Beispielsweise kann Laserlicht für eine Kopplung atomarer Energieniveaus oder ein magnetisches Wechselfeld für eine Kopplung von Spinzuständen verwendet werden.

Das Auslesen der Qubits in dem präparierten Zustand erfolgt ebenfalls durch eine physikalische Wechselwirkung unter Verwendung einer Auslesevorrichtung des Quantencomputersystems, welche von einer Steuervorrichtung gesteuerte wird. Die zum Auslesen verwendete Wechselwirkung hängt von der Art der verwendeten Qubits ab und kann der zum präparieren verwendete Wechselwirkung entsprechen, beispielsweise kann Laserlicht mit einer anderen Wellenlänge oder ein abgeändertes magnetisches Wechselfeld verwendet werden. Beispielsweise kann dieselbe Vorrichtung als Präparierungs- und Auslesevorrichtung verwendet werden.

Das Ausleseergebnis identifiziert für jedes der ausgelesen Qubits beispielsweise einen ausgelesenen Zustand, welcher beispielsweise als ein binärer Wert "0" oder "1" interpretiert werden kann. So kann das Ausleseergebnis in einen digitalen Code bzw. ein digitales Datenobjekt übersetzt werden, wie etwa eine Zahl oder eine alphanummerische Zeichenfolge.

Im Allgemeinen kann der Zustand eines Quantensystems durch Messung nicht immer sicher bestimmt werden. Durch die Messung wird zufällig einer der möglichen Messwerte einer gemessenen Observablen ausgewählt, wobei die Wahrscheinlichkeit jedes Messwertes durch den vor der Messung vorliegenden Zustand bestimmt wird.

Beispielsweise bilden die präparierten Qubits ein inkohärentes Zustandsgemisch.

Nach Ausführungsformen werden die Qubits beispielsweise jeweils in einen definierten Ausgangszustand gebracht und unter Verwendung der Steuerparameter in einen Zwischenzustand präpariert. Dieser präparierte Zustand wird ausgelesen. Nach Ausführungsformen werden die Qubits in einem undefinierten Ausgangszustand unter Verwendung der Steuerparameter in einen Zwischenzustand präpariert. Dieser präparierte Zustand wird ausgelesen.

Nach Ausführungsformen umfasst die kryptographische Anwendung beispielsweise einen Zufallszahlengenerator, einen Schlüsselgenerator, ein Verwenden einer Einwegfunktion, ein Authentifizierungsverfahren, ein Verschlüsselungsverfahren, ein Entschlüsselungsverfahren, ein Signaturverfahren und/oder ein Signaturprüfverfahren. Nach Ausführungsformen handelt es sich bei der kryptographischen Anwendung beispielsweise um eine Zufallszahlenerzeugung, eine Schlüsselerzeugung, einer Einwegfunktion, ein Authentifizieren, ein Verschlüsseln, ein Entschlüsseln, ein Signieren und/oder ein Signaturprüfen.

So kann das von dem Quantencomputersystem bereitgestellte quantenmechanische System ggf. in Kombination mit den weiteren Hardwarekomponenten des Quantencomputersystems beispielsweise als Zufallszahlengenerator, Schlüsselgenerator, Einwegfunktion/Einwegoperator oder Verschlüsselungsfunktion/Verschlüsselungsoperator verwendet werden.

Nach Ausführungsformen umfasst die Präparierungsvorrichtung beispielsweise eine Mehrzahl von Frequenzgeneratoren umfasst. Nach Ausführungsformen ist beispielsweise jeweils einer der Frequenzgeneratoren einem der Qubits zugeordnet. Nach Ausführungsformen wird beispielsweise unter Verwendung einer von dem Frequenzgenerator erzeugten Frequenz der Zustand des dem entsprechenden Frequenzgenerator zugeordneten Qubits präpariert. Das von dem entsprechenden Frequenzgenerator erzeugte Signal dient beispielsweise dazu das Qubit anzuregen, d.h. es aus dem Grundzustand in einen angeregten Zustand anzuheben. Ausführungsformen können den Vorteil haben, dass durch Steuerung der individuellen Frequenzgeneratoren mit individuellen Steuerparametern individuelle Frequenzen erzeugt und damit individuelle Zustände der Qubits präpariert werden können.

Nach Ausführungsformen werden die Qubits initial jeweils in einem Ausgangszustand präpariert. Bei den Ausgangszuständen der Qubits handelt es sich um eindeutig definierte Eigenzustände handelt. Ausführungsformen können den Vorteil haben, dass ein Verwenden von eindeutig definierten Ausgangszuständen ein deterministisches Ausleseergebnis bei Verwendung identischer Steuerparameter ermöglichen kann. Entsprechende eindeutige Eigenzustände können beispielsweise durch ein initiales Auslesen der Qubits festgelegt werden. Beispielsweise werden die Qubits vor dem initialen Auslesen jeweils unter Verwendung der Präparierungsvorrichtung in Eigenzuständen präpariert.

Nach Ausführungsformen handelt es sich bei den Ausgangszuständen der Qubits um eine Codierung eines Datensatzes, auf welchen die kryptographische Anwendung angewendet wird. Ausführungsformen können den Vorteil haben, dass durch Präparieren der Qubits in den Ausgangszuständen eine kryptographische Funktion direkt auf die Qubits und damit den entsprechend codierten Datensatz angewendet werden kann. Diese kryptographische Funktion kann beispielsweise durch das Quantencomputersystem und dessen individuelle physikalische bzw. Hardwareeigenschaften selbst definiert sein. Bei der entsprechenden kryptographischen Funktion kann es sich beispielsweise um eine Einwegfunktion oder eine Verschlüsselungsfunktion handeln.

Nach Ausführungsformen wird das Quantencomputersystem als Zufallszahlengenerator verwendet. Bei den Steuerparametern des Satzes von ein oder mehreren Steuerparametern handelt es sich beispielsweise um zufällig ausgewählte Steuerparameter. Der Code wird als Zufallswert zum Bereitstellen einer Zufallszahl für die kryptographische Anwendung verwendet. Ausführungsformen können den Vorteil haben, dass ein effektiver Zufallsgenerator bereitgestellt werden kann. Beispielsweise kann unter Verwendung des Quantencomputersystems ein nicht klonbarer deterministischer Zufallsgenerator realisiert werden. Das bedeutet, dass bei Verwendung identischer Steuerparameter und identischer Ausgangszustände für dasselbe Quantencomputersystem identische Zufallswerte generiert werden können, wobei eine Verwendung identischer Steuerparameter und identischer Ausgangszustände bei einem baugleichen anderen Quantencomputersystem zu einem anderen Zufallswert führen kann.

Nach Ausführungsformen handelt es sich bei der Zufallszahl um eine Standardzufallszahl, d.h. um auf [0; 1] gleichverteilte Zufallsvariablen. Beispielsweise werden die aus der Verwendung des Quantencomputersystems resultierenden Zufallswerte hierzu auf das Intervall [0; 1] abgebildet, etwa unter Verwendung einer linearen Transformation. Nach Ausführungsformen handelt es sich bei der Zufallszahl um einen beliebigen Zufallswert innerhalb eines von der maximalen Länge des Codes abhängigen Wertebereichs bzw. Intervall möglicher Zufallswerte.

Nach Ausführungsformen umfasst die kryptographische Anwendung beispielsweise ein Erzeugen eines kryptographischen Schlüssels. Nach Ausführungsformen wird die Zufallszahl beispielsweise als Seed zum Erzeugen des kryptographischen Schlüssels verwendet. Bei dem kryptographischen Schlüssel handelt es sich beispielsweise um ein einen symmetrischen oder einen asymmetrischen Schlüssel. Nach Ausführungsformen umfasst die kryptographische Anwendung beispielsweise ein Anwenden einer Einwegfunktion. Die Zufallszahl wird beispielsweise als Salt zur Erhöhung der Entropie einer Eingabe der Einwegfunktion verwendet. Bei der Einwegfunktion handelt es sich beispielsweise um eine Hashfunktion.

Wenn der unter Verwendung des Quantencomputersystems erzeugte Zufallswert in einem klassischen Algorithmus verwendet wird, so mag es diesem Algorithmus ggf. an einer Widerstandsfähigkeit gegenüber der Quantenüberlegenheit mangeln. Dennoch können solche Ausführungsformen den Vorteil haben, dass ein effektiver Zufallszahlengenerator bereitgestellt werden kann und/oder dass die Erzeugung der Zufallszahlen selbst auch unter Verwendung eines Quantencomputersystems nicht effektiv simuliert werden kann. Mit anderen Worten stellt das Quantencomputersystem selbst die Funktion bzw. den Operator dar, welche den Zufallswert erzeugt. Somit kann anhand der Zufallszahl nicht ohne erheblichen Rechen- und Zeitaufwand ermittelt werden, welche Kombination aus Ausgangszuständen der Qubits und verwendeter Steuerparameter in dem entsprechenden Zufallswert resultieren. Insbesondere kann die durch das Quantencomputersystem bereitgestellte Funktion zur Erzeugung des Zufallswerts aufgrund von individuellen physikalischen Eigenschaften bzw. Hardwareeigenschaften des Quantencomputersystems charakteristisch für das individuelle Quantencomputersystem sein. Dies bedeutet, dass sich für identische Ausgangszustände der Qubits und identische Steuerparameter bei einem baugleichen anderen Quantencomputersystem ein anderer Zufallswert ergeben kann. Mithin kann das Quantencomputersystem einen nicht klonbaren Zufallszahlengenerator bereitstellen.

Nach Ausführungsformen handelt es sich bei dem Quantencomputersystem um einen Schlüsselgenerator zur Erzeugung eines kryptographischen Schlüssels. Bei den Steuerparametern des Satzes von ein oder mehreren Steuerparametern handelt es sich beispielsweise um zufällig ausgewählte Steuerparameter. Der Code wird als kryptographischer Schlüssel, beispielsweise als symmetrischer Schlüssel, verwendet. Ausführungsformen können den Vorteil haben, dass der kryptographischen Schlüssel unter Verwendung quantenmechanischer Phänomene erzeugt werden kann. Herbei stellt das Quantencomputersystem selbst die Schlüsselerzeugungsfunktion bzw. den Operator dar, welcher den kryptographischen Schlüssel erzeugt. Insbesondere kann die durch das Quantencomputersystem bereitgestellte Funktion zur Erzeugung des kryptographischen Schlüssels aufgrund von individuellen physikalischen Eigenschaften bzw. Hardwareeigenschaften des Quantencomputersystems charakteristisch für das individuelle Quantencomputersystem sein. Dies bedeutet, dass sich für identische Ausgangszustände der Qubits und identische Steuerparameter bei einem baugleichen anderen Quantencomputersystem ein anderer Wert für den kryptographischen Schlüssel bzw. ein anderer kryptographischer Schlüssel ergeben kann. Mithin kann das Quantencomputersystem einen nicht klonbaren Schlüsselgenerator bereitstellen.

Nach Ausführungsformen werden im Zuge eines Vereinbarens des kryptographischen Schlüssels Angaben der zu verwendenden Steuerparameter des Satzes von ein oder mehreren Steuerparametern und/oder der zu verwendenden Ausgangszustände der Qubits zum Erzeugen des kryptographischen Schlüssels bereitgestellt. Ausführungsformen können den Vorteil haben, dass im Zuge eines Vereinbarens eines zu verwendenden kryptographischen Schlüssels nicht der kryptographische Schlüssel, sondern der zu verwendenden Steuerparameter des Satzes von ein oder mehreren Steuerparametern und/oder der zu verwendenden Ausgangszustände der Qubits übermittelt wird. Ferner wird beispielsweise das zur Schlüsselerzeugung zu verwendende Quantencomputersystem identifiziert. Beispielsweise teilt ein erster Teilnehmer einem zweiten Teilnehmer die entsprechenden Angaben zur Schlüsselerzeugung mit. Beispielsweise wird das zur Schlüsselerzeugung zu verwendende Quantencomputersystem von dem zweiten Teilnehmer oder einem unabhängigen dritten Teilnehmer bereitgestellt. Beispielsweise wird ein Zugriff auf das Quantencomputersystem von dem dritten Teilnehmer für den ersten und/oder zweiten Teilnehmer über ein Netzwerk bereitgestellt. Beispielsweise hat der erste Teilnehmer Kenntnis von den für die Erzeugung des kryptographischen Schlüssels zu verwendenden Steuerparametern und/oder der zu verwendenden Ausgangszuständen der Qubits. Beispielsweise greift der erste Teilnehmer auf das von dem dritten Teilnehmer bereitgestellte Quantencomputersystem zu und erzeugt einen kryptographischen Schlüssel. Um dem zweiten Teilnehmer denselben kryptographischen Schlüssel bereitzustellen, sendet der erste Teilnehmer dem zweiten Teilnehmer beispielsweise Angaben zu den zu verwendenden Steuerparametern und/oder den zu verwendenden Ausgangszuständen der Qubits. Beispielsweise identifiziert der erste Teilnehmer ferner das für die Schlüsselerzeugung zu verwendende Quantencomputersystem. Der zweite Teilnehmer wird somit in die Lage versetzt ebenfalls auf das von dem dritten Teilnehmer bereitgestellte (identifizierte) Quantencomputersystem zuzugreifen und den zu verwendenden kryptographischen Schlüssel unter Verwendung der bereitgestellten bzw. empfangenen Angaben zu den zu verwendenden Steuerparametern und/oder zu den zu verwendenden Ausgangszuständen der Qubits zu erzeugen.

Nach Ausführungsformen ist eine Abbildung der Steuerparameter des Satzes von ein oder mehreren Steuerparametern auf das Ausleseergebnis der präparierten Qubits charakteristisch für das Quantencomputersystem. Bei der kryptographischen Anwendung handelt es sich um ein Authentifizierungsverfahren handelt. Ein erster Teilnehmer authentifiziert einen zweiten Teilnehmer des Authentifizierungsverfahrens unter Verwendung des Codes. Ausführungsformen können den Vorteil haben, dass somit eine Authentifizierung basierend auf quantenmechanischen Phänomenen ermöglicht werden kann.

Nach Ausführungsformen ist dem ersten Teilnehmer der aus vorgegebenen Ausgangszuständen der Qubits und einem vorgegebenen Satz von ein oder mehreren Steuerparametern resultierende Code bekannt. Der zweite Teilnehmer befindet sich im Besitz des Quantencomputersystems und weist den Besitz zum Zwecke des Authentifizierungsverfahrens durch ein Senden des Codes, welcher unter Verwendung der vorgegebenen Ausgangszuständen der Qubits und des vorgegebenen Satz von ein oder mehreren Steuerparametern erzeugt wird, an den ersten Teilnehmer nach. Ausführungsformen können den Vorteil haben, dass der Besitz bzw. der Zugriff des zweiten Teilnehmers auf das Quantencomputersystem als geheimnishütenden Gegenstand als ein Authentifizierungsfaktor verwendet werden kann. Beispielsweise kann dieser Authentifizierungsfaktor für sich alleine genommen zum Zwecke einer Ein-Faktor-Authentifizierung oder in Kombination mit ein oder mehreren weiteren Authentifizierungsfaktoren im Zuge einer Mehr-Faktor-Authentifizierung, etwa einer Zwei-Faktor-Authentifizierung oder Drei-Faktor-Authentifizierung, verwendet werden.

Das zu hütende Geheimnis besteht dabei beispielsweise in der Abbildung der Steuerparameter des Satzes von ein oder mehreren Steuerparametern auf das Ausleseergebnis der präparierten Qubits, d.h. in den individuellen physikalischen Eigenschaften bzw. Hardwareeigenschaften des Quantencomputersystems. Sendet der zweite Teilnehmer den korrekten Code in Antwort auf eine Authentifizierungsanfrage des ersten Teilnehmers, kann der erste Teilnehmer anhand der Antwort nachprüfen, ob sich der zweite Teilnehmer tatsächlich im Besitz eines im zugeordneten Quantencomputersystems befindet, für welchen der entsprechende Code charakteristisch ist. Falls die Prüfung erfolgreich ist gilt der zweite Teilnehmer als authentifiziert.

Beispielsweise sind dem ersten Teilnehmer eine Mehrzahl von Codes bekannt, welche sich jeweils für eine bestimmte Kombination von Ausgangszuständen der Qubits und einem vorgegebenen Satz von ein oder mehreren Steuerparametern ergeben. Aus dieser Mehrzahl von Codes wählt der erste Teilnehmer beispielsweise einen Code aus und sendet dem zweiten Teilnehmer eine Authentifizierungsanfrage, welche die zu verwendenden Ausgangszustände der Qubits sowie die zu verwendeten Steuerparameter für den ausgewählten Code identifizieren. Empfängt der erste Teilnehmer in Antwort auf die Authentifizierungsanfrage von dem zweiten Teilnehmer den ausgewählten Code bzw. eine Nachricht, welche den ausgewählten Code eindeutig identifiziert, gilt der zweite Teilnehmer als identifiziert. Beispielsweise wählt der erste Teilnehmer für das Authentifizierungsverfahren mehr als einen Code aus der Mehrzahl von Codes aus und sendet eine Authentifizierungsanfrage, welche die zu verwendenden Ausgangszustände der Qubits sowie die zu verwendeten Steuerparameter für jeden der ausgewählten Codes identifiziert. Beispielsweise muss der zweite Teilnehmer für eine erfolgreich Authentifizierung durch den ersten Teilnehmer für alle zu verwendenden Ausgangszustände der Qubits und zu verwendenden Steuerparameter jeweils einen Code mit dem Quantencomputersystem erzeugen und dem ersten Teilnehmer zusenden. Der erste Teilnehmer prüft diese Codes und bestätigt, falls diese korrekt sind, die erfolgreich Authentifizierung.

Nach Ausführungsformen ist dem ersten Teilnehmer der aus vorgegebenen Ausgangszuständen der Qubits und einem vorgegebenen Satz von ein oder mehreren Steuerparametern resultierende Code bekannt. Das Quantencomputersystem wird von einem unabhängigen dritten Teilnehmer bereitgestellt. Der zweite Teilnehmer weist sein Wissen über die vorgegebenen Ausgangszuständen der Qubits und/oder einen vorgegebenen Satz von ein oder mehreren Steuerparametern zum Zwecke des Authentifizierungsverfahrens durch das Präparieren der Qubits unter Verwendung der vorgegebenen Ausgangszuständen der Qubits und des vorgegebenen Satz von ein oder mehreren Steuerparametern nach. Der erste Teilnehmer liest zum Prüfen des Nachweises die präparierten Qubits aus. Ausführungsformen können den Vorteil haben, dass eine Kenntnis des zweiten Teilnehmers über die Ausgangszustände der Qubits und/oder einen Satz von ein oder mehreren Steuerparametern, welche zum Erzeugen eines bestimmten Codes zu verwenden sind, als ein Geheimnis bzw. als ein Authentifizierungsfaktor verwendet werden kann, ähnlich einer PIN oder Passphrase. Beispielsweise speichert der erste Teilnehmer lediglich den resultierenden Code zu Prüfzwecke. Beispielsweise kann dieser Authentifizierungsfaktor für sich alleine genommen zum Zwecke einer Ein-Faktor-Authentifizierung oder in Kombination mit ein oder mehreren weiteren Authentifizierungsfaktoren im Zuge einer Mehr-Faktor-Authentifizierung, etwa einer Zwei-Faktor-Authentifizierung oder Drei-Faktor-Authentifizierung, verwendet werden.

Das zu hütende Geheimnis besteht dabei beispielsweise in der Kenntnis der Ausgangszuständen der Qubits und/oder des Satzes von ein oder mehreren Steuerparametern. Auf eine Authentifizierungsanfrage des ersten Teilnehmers hin, welche den für eine erfolgreiche Authentifizierung bereitzustellenden Code identifiziert, greift der zweite Teilnehmer auf das von dem dritten Teilnehmer bereitgestellte Quantencomputersystem zu und präpariert die Qubits unter Verwendung seines geheimen Wissens, d.h. der entsprechenden Ausgangszuständen der Qubits und/oder Steuerparameter. Der zweite Teilnehmer greift auf das Quantencomputersystem zu und liest die präparierten Qubits aus. Falls der aus den präparierten Qubits resultierende Code mit dem von dem ersten Teilnehmer gespeicherten Code übereinstimmt, ist die Authentifizierung beispielsweise erfolgreich und wird dem zweiten Teilnehmer von dem ersten Teilnehmer bestätigt.

Beispielsweise sind dem ersten Teilnehmer eine Mehrzahl von Codes bekannt, welche sich jeweils für eine bestimmte Kombination von Ausgangszuständen der Qubits und einem vorgegebenen Satz von ein oder mehreren Steuerparametern ergeben. Aus dieser Mehrzahl von Codes wählt der erste Teilnehmer beispielsweise einen Code aus und sendet dem zweiten Teilnehmer eine Authentifizierungsanfrage, welche den ausgewählten und seitens des zweiten Teilnehmers zu seiner Authentifizierung bereitzustellenden Code identifiziert. Beispielsweise wählt der erste Teilnehmer für das Authentifizierungsverfahren mehr als einen Code aus der Mehrzahl von Codes aus und sendet eine Authentifizierungsanfrage an den zweiten Teilnehmer, welche die ausgewählten Codes identifiziert. Beispielsweise muss der zweite Teilnehmer für eine erfolgreich Authentifizierung durch den ersten Teilnehmer alle bereitzustellenden Codes mit dem Quantencomputersystem erzeugen und von dem ersten Teilnehmer auslesen lassen. Der erste Teilnehmer prüft diese Codes und bestätigt, falls diese korrekt sind, die erfolgreich Authentifizierung.

Nach Ausführungsformen umfasst die kryptographische Anwendung ein Verschlüsseln eines Datensatzes. Bei den Ausgangszuständen der Qubits handelt es sich beispielsweise um die Codierung des zu verschlüsselnden Datensatzes. Die Steuerparameter des Satzes von ein oder mehreren Steuerparametern werden als kryprographischer Schlüssel verwendet und bei dem resultierenden Code handelt es sich um den verschlüsselten Datensatz. Ausführungsformen können den Vorteil haben, dass das Quantencomputersystem selbst als physische Implementierung eines individuellen Verschlüsselungsverfahrens dient. Das Resultat der Verschlüsselung, d.h. das Ausleseergebnis der präparierten Qubits, hängt beispielsweise von den individuellen physikalischen Eigenschaften bzw. den Hardwareeigenschaften des verwendenden Quantencomputersystems ab. Beispielsweise wird das entsprechende Quantencomputersystem von einem unabhängigen Teilnehmer zum Verschlüsseln von Datensätzen, z.B. zur Online-Verschlüsselung von Datensätzen, bereitgestellt.

Nach Ausführungsformen umfasst die kryptographische Anwendung ein Anwenden einer Einwegfunktion auf einen Datensatz. Bei den Ausgangszuständen der Qubits handelt es sich um die Codierung des Datensatzes, auf welchen die Einwegfunktion anzuwenden ist. Die Steuerparameter des Satzes von ein oder mehreren Steuerparametern werden als Salt für die Einwegfunktion verwendet und bei dem resultierenden Code handelt es sich um das Ergebnis der Anwendung der Einwegfunktion auf den Datensatz. Ausführungsformen können den Vorteil haben, dass das Quantencomputersystem selbst als physische Implementierung einer individuellen Einwegfunktion dient. Das Resultat der Anwendung der Einwegfunktion, d.h. das Ausleseergebnis der präparierten Qubits, hängt beispielsweise von den individuellen physikalischen Eigenschaften bzw. den Hardwareeigenschaften des verwendenden Quantencomputersystems ab. Beispielsweise wird das entsprechende Quantencomputersystem von einem unabhängigen Teilnehmer als Einwegfunktion zur Nutzung, z.B. zur Online-Nutzung, bereitgestellt.

Bei dem Ergebnis der Einwegfunktion handelt es sich beispielsweise um einen für den Datensatz eindeutigen Wert, welcher als Prüfwert für eine Integritätsprüfung des Datensatzes eingesetzt werden kann. Soll der Datensatz auf seine Integrität hin geprüft werden, kann der Prüfwert in Form des Ergebnisses der Einwegfunktion berechnet und mit einem bekannten Referenzwert für das Ergebnis verglichen werden. Weicht das neue Ergebnis bei Verwendung derselben Steuerparameter und ggf. desselben Quantencomputersystems von dem Referenzwert ab, wurde der Datensatz verändert. Bei einer Übereinstimmung wurde der Datensatz nicht verändert, d.h., durch die Übereinstimmung wird die Integrität des Datensatzes belegt.

Ferner kann die Einwegfunktion zur sicheren Speicherung des Datensatzes, etwa eines Passworts dienen. Wenn der Datensatz auf seine Korrektheit hin geprüft werden soll, kann das Ergebnis der Einwegfunktion für den Datensatz berechnet und mit einem gespeicherten Referenzergebnis der Einwegfunktion für den Datensatz verglichen werden. Stimmen beide Werte, d.h. das berechnete Ergebnis und das gespeicherte Referenzergebnis, überein, ist der bereitgestellte Datensatz, etwa ein Passwort, korrekt. Dies bietet den Vorteil, dass der Datensatz für die Prüfung nicht in Klartext gespeichert wird, sondern lediglich das Ergebnis der Einwegfunktion. Aus diesem gespeicherten Ergebnis lassen sich aber beispielsweise keine relevanten Rückschlüsse auf den Inhalt des Datensatzes ziehen.

Ausführungsformen umfassen ferner ein Quantencomputersystem, welches eine Mehrzahl von Qubits umfasst und dazu konfiguriert ist im Zuge eines Ausführens einer kryptographischen Anwendung folgendes Verfahren auszuführen:
Präparieren mehrere der Qubits in jeweils individuellen Zwischenzuständen, wobei zum Präparieren der Qubits eine Präparierungsvorrichtung des Quantencomputersystems verwendet wird, welche unter Verwendung eines Satzes von ein oder mehreren Steuerparametern gesteuert wird,
Auslesen der präparierten Qubits,
Verwenden des Ausleseergebnisses der präparierten Qubits als Code für die kryptographische Anwendung.

Nach Ausführungsformen ist das Quantencomputersystem dazu konfiguriert jede der vorgenannten Ausführungsformen des Verfahrens zum Verwenden eines Quantencomputersystems für eine kryptographische Anwendung auszuführen.

Unter einer "Kommunikationsschnittstelle" wird hier beispielsweise eine Schnittstelle verstanden, über die Daten empfangen und gesendet werden können, wobei die Kommunikationsschnittstelle kontaktbehaftet oder kontaktlos konfiguriert sein kann.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" wird hier insbesondere ein nichtflüchtiger Speicher verstanden. Unter einem "nichtflüchtigen Speicher" wird hier beispielsweise ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer kryptographischen Anwendung wird hier eine Anwendung mathematische Verfahren zum Sicherstellen und/oder prüfen von Informationssicherheit verstanden. Im Zuge einer kryptographischen Anwendung können beispielsweise Zufallszahlen, kryptographische Schlüssel, Einwegfunktionen, wie etwa eine Hashfunktion, Verschlüsselungsalgorithmen, digitale Signaturen etc. verwendet werden.

Unter eine "kryptographischen Schlüssel" wird eine Information verstanden, welche einen kryptographischen Algorithmus parametrisiert und diesen so steuert.

Eine "Authentifizierung" bezeichnet eine Verifizierung einer behaupteten Eigenschaft einer Entität. Im Zuge einer Authentifizierung wird beispielsweise ein erbrachter Nachweis verifiziert. Die Entität führt durch ihren Beitrag zur Authentifizierung, d.h. durch Bereitstellen entsprechender Nachweise wie Authentifizierungsfaktoren zur Prüfung, eine Authentisierung durch.

Ein Challenge-Response-Verfahren stellt ein sicheres Authentifizierungsverfahren einer ersten Instanz gegenüber einer zweiten Instanz dar. Im Zuge des Challenge-Response-Verfahren stellt die erste Instanz der zweiten Instanz eine Aufgabe ("Challenge"), für welche die zweite Instanz eine korrekte Antwort ("Response") liefern muss.

Im Weiteren werden Ausführungsformen der Erfindung mit Bezugnahme auf die Zeichnungen näher erläutert. Es zeigen:
- Figur 1: ein schematisches Blockdiagramm eines exemplarischen Quantencomputersystems,
- Figur 2: ein schematisches Blockdiagramm eines exemplarischen Systems mit einem Quantencomputersystem,
- Figur 3: ein schematisches Flussdiagramm eines exemplarischen Verfahrens zum Verwenden eines Quantencomputersystems für ein kryptographisches Verfahren,
- Figur 4: ein schematisches Flussdiagramm eines exemplarischen Verfahrens zum Verwenden eines Quantencomputersystems für ein Authentifizierungsverfahren, und
- Figur 5: ein schematisches Flussdiagramm eines exemplarischen Verfahrens zum Verwenden eines Quantencomputersystems für ein Authentifizierungsverfahren.

Elemente der nachfolgenden Ausführungsformen, die einander entsprechen, werden mit denselben Bezugszeichen gekennzeichnet.

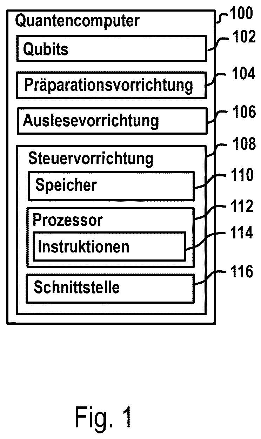

Figur 1 zeigt ein exemplarisches Quantencomputersystem 100. Das Quantencomputersystem 100 umfasst eine Mehrzahl von Qubits 102, welche unter Verwendung einer Präparationsvorrichtung 104 in quantenmechanischen Zuständen, beispielsweise in Eigenzuständen und Zwischenzuständen präpariert werden können. Das Quantencomputersystem 100 und insbesondere die Präparationsvorrichtung 104 werden unter Verwendung einer Steuervorrichtung 108 gesteuert. Die Zustände der Qubits 102 werden unter Verwendung eines Satzes von ein oder mehreren Steuerparametern gesteuert, welche die Steuervorrichtung 108 zum Steuern der Präparationsvorrichtung 104 verwendet. Ferner umfasst das Quantencomputersystem 100 eine Auslesevorrichtung 106 zum Auslesen der präparierten Qubits 102. Die Steuervorrichtung 108 umfasst einen Prozessor 112 zum Steuern des Quantencomputersystems 100 unter Verwendung vom Programminstruktionen 114, welche der Prozessor112 ausführt. Insbesondere steuert die Steuervorrichtung 108 beispielsweise die Präparationsvorrichtung 104 zum Präparieren der Qubits 102 und die Auslesevorrichtung 106 zum Auslesen der präparierten Qubits 102. Das Ausleseergebnis der präparierten Qubits 102 wird in einen Code, z.B. einen digitalen Code bzw. ein digitales Datenobjekt, wie etwa eine Zahl oder eine alphanummerische Zeichenfolge übersetzt. Steuerparameter, gemäß denen der Prozessor 112 der Steuervorrichtung 108 das Präparieren der Qubits 102 mittels der Präparationsvorrichtung 104 steuert, werden beispielsweise über eine Kommunikationsschnittstelle 116 des Quantencomputersystems 100 empfangen. Ferner wird über die Kommunikationsschnittstelle 116 des Quantencomputersystems 100 der auf den ausgelesenen Qubits 102 basierende Code gesendet.

Beispielsweise wird der resultierende Code als Zufallszahl verwendet. Beispielsweise wird diese Zufallszahl als Seed zum Erzeugen eines kryptographischen Schlüssels verwendet. Beispielsweise wird die Zufallszahl als Salt zur Erhöhung der Entropie einer Eingabe einer Einwegfunktion, wie etwa einer Hash-Funktion, verwendet. Beispielsweise wird der resultierende Code als kryptographischer Schlüssel verwendet. Beispielsweise wird die Präparationsvorrichtung 104 dazu verwendet, die Qubits 102 initial jeweils in einem Ausgangszustand zu präparieren. Bei den so präparierten Ausgangszuständen der Qubits 102 handelt es sich beispielsweise um eine Codierung eines Datensatzes, auf welchen eine von dem Quantencomputersystem 100 bereitgestellte bzw. in Form des Quantencomputersystems 100 implementierte kryptographische Funktion angewendet wird. Beispielsweise handelt es sich bei den Ausgangszuständen um eindeutig definierte Eigenzustände der Qubits 102, welche den Datensatz beispielsweise in Form eines Binärcodes codieren. Beispielsweise handelt es sich bei der kryptographischen Funktion um eine Verschlüsselung des Datensatzes, wobei die zum Präparieren der Qubits 102, welche sich in den Ausgangszuständen befinden, verwendeten Steuerparameter einen kryptographischen Schlüssel darstellen. Beispielsweise handelt es sich bei der kryptographischen Funktion um eine Einwegfunktion.

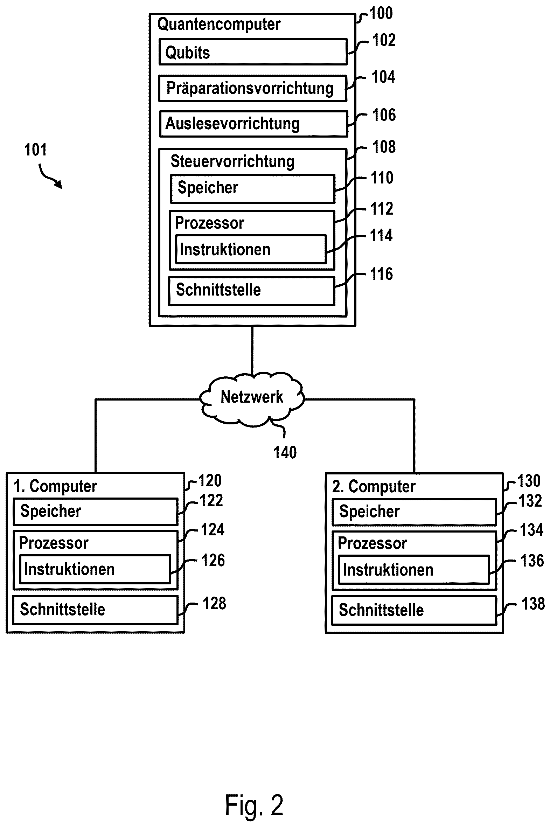

Figur 2 zeigt ein exemplarisches System 101, welches ein Quantencomputersystem 100 umfasst. Das Quantencomputersystem 100 entspricht dem in Figur 1 gezeigten Quantencomputersystem 100. Ferner umfasst das System 101 ein erstes und ein zweites weiteres Computersystem 120, 130. Das erste Computersystem 120 umfasst einen Speicher 122 und einen Prozessor 124, welcher Programminstruktionen 126 ausführt und das erste Computersystem 120 gemäß den Programminstruktionen 126 steuert. Ferner umfasst das erste Computersystem 120 eine Kommunikationsschnittstelle 128 zur Kommunikation über das Netzwerk 140 mit dem Quantencomputersystem 100 und/oder dem zweiten Computersystem 130. Das zweite Computersystem 130 umfasst einen Speicher 132 und einen Prozessor 134, welcher Programminstruktionen 136 ausführt und das zweite Computersystem 130 gemäß den Programminstruktionen 136 steuert. Ferner umfasst das zweite Computersystem 130 eine Kommunikationsschnittstelle 138 zur Kommunikation über das Netzwerk 140 mit dem Quantencomputersystem 100 und/oder dem ersten Computersystem 120.

Beispielsweise befindet sich das Quantencomputersystem 100 im Besitz des Nutzers des zweiten Computersystems 130. Beispielsweise empfängt der Nutzer des zweiten Computersystems 130 unter Verwendung der Kommunikationsschnittstelle 138 eine Authentifizierungsanfrage des ersten Computersystems 120 über das Netzwerk 140. Die Authentifizierungsanfrage identifiziert beispielsweise Ausgangszustände und/oder Steuerparameter zum Steuern der Präparationsvorrichtung 104. Der unter Verwendung der entsprechenden Ausgangszustände und Steuerparameter resultierende Code ist dem ersten Computersystem 120 bekannt. Beispielsweise ist ein entsprechender Referenzwert in dem Speicher 122 gespeichert. Das zweite Computersystem 130 steuert das Quantencomputersystem 100 beispielsweise über das Netzwerk 140 oder über eine direkte Kommunikationsverbindung, kabellos oder kabelgebunden, an und bringt die Qubits 102 unter Verwendung der Steuervorrichtung 108 in die vorgegeben Ausgangszustände. Bei diesen Ausgangszuständen kann es sich um explizit vorgegebene Ausgangzustände oder standardmäßig verwendete Ausgangszustände handeln.

Anschließend werden die Qubits 102 unter Verwendung der Präparationsvorrichtung 104, welche die Steuervorrichtung 108 mit den vorgegebene Steuerparametern steuert, präpariert und unter Verwendung der Auslesevorrichtung 106 ausgelesen. Das Ausleseergebnis wird in einen Code übersetzt und über das Netzwerk 140 in Antwort auf die Authentifizierungsanfrage an das erste Computersystem 120 gesendet. Das erste Computersystem 120 empfängt die Antwort mit dem Code über die Kommunikationsschnittstelle 128 und vergleicht den empfangenen Code mit dem gespeicherten Referenzwert. Bei deiner Übereinstimmung bestätigt das erste Computersystem 120 dem zweiten Computersystem 130 die erfolgreiche Authentifizierung. Ein solches Authentifizierungsverfahren entspricht einem Challenge-Response-Verfahren, bei welchem die Ausgangszustände und/oder Steuerparameter die Challenge und der resultierende Code die Response ist. Alternative oder zusätzlich kann eine analoge Authentifizierung des ersten Computersystems 120 durch das zweite Computersystem 130 erfolgen.

Beispielsweise ist das Quantencomputersystem 100 unabhängig von den beiden Computersystemen 120, 130. Beispielsweise empfängt der Nutzer des zweiten Computersystems 130 unter Verwendung der Kommunikationsschnittstelle 138 eine Authentifizierungsanfrage des ersten Computersystems 120 über das Netzwerk 140. Die Authentifizierungsanfrage identifiziert beispielsweise einen zum Zwecke der Authentifizierung des zweiten Computersystem 130 durch das erste Computersystem bereitzustellenden Code. In dem Speicher 132 des zweiten Computersystems 130 sind beispielsweise die zum Erzeugen des entsprechenden Codes zu verwendenden Ausgangszustände und/oder Steuerparameter zum Steuern der Präparationsvorrichtung 104 gespeichert. Der unter Verwendung der entsprechenden Ausgangszustände und Steuerparameter resultierende Code ist dem ersten Computersystem 120 bekannt. Beispielsweise ist ein entsprechender Referenzwert in dem Speicher 122 gespeichert. Das zweite Computersystem 130 steuert das Quantencomputersystem 100 beispielsweise über das Netzwerk 140 oder über eine direkte Kommunikationsverbindung, kabellos oder kabelgebunden, an und bringt die Qubits 102 unter Verwendung der Steuervorrichtung 108 in die vorgegeben Ausgangszustände. Bei diesen Ausgangszuständen kann es sich um explizit vorgegebene Ausgangzustände oder standardmäßig verwendete Ausgangszustände handeln.

Anschließend werden die Qubits 102 unter Verwendung der Präparationsvorrichtung 104, welche die Steuervorrichtung 108 mit den vorgegebene Steuerparametern steuert, präpariert. Beispielsweise steuert das zweite Computersystem 130 das Quantencomputersystem 100 über das Netzwerk 140 oder über eine direkte Kommunikationsverbindung, kabellos oder kabelgebunden, an und präpariert die Qubits 102 unter Verwendung der Präparationsvorrichtung 104. Das erste Computersystem 120 greift anschließend beispielsweise unter Verwendung der Kommunikationsschnittstelle 128 über das Netzwerk 140 oder über eine direkte Kommunikationsverbindung, kabellos oder kabelgebunden, auf das Quantencomputersystem 100 zu und liest die von dem zweiten Computersystem 130 präparierten Qubits 102 unter Verwendung der Auslesevorrichtung 106 aus, welche über die Steuervorrichtung 108 gesteuert wird. Das Ausleseergebnis wird unter Verwendung der Steuervorrichtung 108 in einen Code übersetzt, welchen das erste Computersystem 120 über das Netzwerk 140 empfängt. Das erste Computersystem 120 vergleicht diesen Code mit dem gespeicherten Referenzwert. Bei deiner Übereinstimmung bestätigt das erste Computersystem 120 dem zweiten Computersystem 130 die erfolgreiche Authentifizierung. Alternative oder zusätzlich kann eine analoge Authentifizierung des ersten Computersystems 120 durch das zweite Computersystem 130 erfolgen. Die Kommunikation zwischen dem ersten und zweiten Computersystem 120, 130, zwischen dem ersten Computersystem 120 und dem Quantencomputersystem 100 und/oder zwischen dem zweiten Computersystem 130 und dem Quantencomputersystem 100 über das Netzwerk 140 kann beispielsweise verschlüsselt, etwa unter Verwendung einer Ende-zu-Ende-Verschlüsselung erfolgen. Bei dem Netzwerk 140 kann es sich beispielsweise um ein öffentliches Netzwerk, wie etwa das Internet, oder ein zugangsbeschränktes Netzwerk, etwa ein Intranet, handeln.

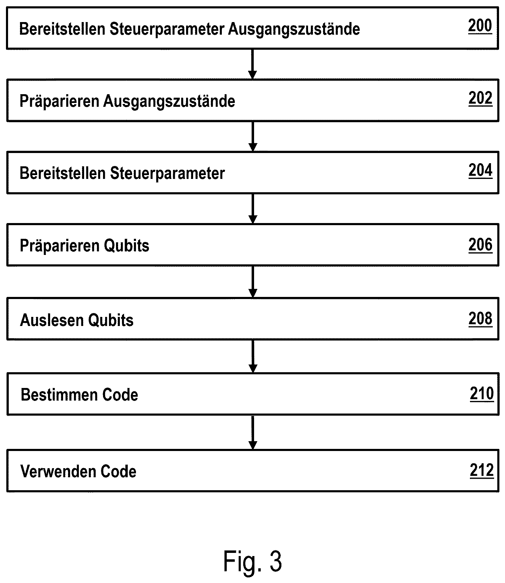

Figur 3 zeigt ein exemplarisches Verfahren zum Verwenden eines Quantencomputersystems für ein kryptographisches Verfahren. In Block 200 werden initiale Steuerparameter zum Herstellen von Ausgangszuständen der Qubits des Quantencomputersystems bereitgestellt. Bei diesen Ausgangszuständen handelt es sich beispielsweise um eindeutig definierte Eigenzustände der Qubits. Diese Ausgangszuständen können Standardausgangszustände oder explizit im Zuge des individuellen Verfahrens vorgegebene Zustände sein. Die zu verwendenden Zustände können ferner eine Codierung eines Datensatzes darstellen. Beispielsweise können die Ausgangszustände im Falle einer Erzeugung einer Zufallszahl auch zufällig gewählt werden. In Block 202 werden die Qubits in den entsprechenden Ausgangszuständen präpariert. Beispielsweise können die Qubits durch ein Auslesen in ihre Eigenzustände gebracht werden. Die Ausgangszuständen können beispielsweise von außen vorgegeben sein, etwa als eine Challenge, oder es kann sich bei diesen beispielsweise um ein geheimes Wissen für eine Authentifizierung handeln. Im Falle einer Erzeugung einer Zufallszahl können die Blöcke 200 und 202 beispielsweise auch wegfallen. In Block 204 werden Steuerparameter zum Präparieren der Qubits bereitgestellt. Die entsprechenden Steuerparameter können beispielsweise von außen vorgegeben sein, etwa als eine Challenge, oder es kann sich bei diesen beispielsweise um ein geheimes Wissen für eine Authentifizierung handeln. Ferner können diese Steuerparameter als kryptographischer Schlüssel für eine Verschlüsselung mittels des Quantencomputersystems oder als Salt für eine durch das Quantencomputersystem implementierte Einwegfunktion dienen. Beispielsweise können die Steuerparameter im Falle einer Erzeugung einer Zufallszahl auch zufällig gewählt werden. In Block 206 werden die Qubits unter Verwendung der in Block 206 bereitgestellten Qubits präpariert.

In Block 208 werden die präparierten Qubits ausgelesen. In Block 210 wird das Ausleseergebnis in einen digitalen Code übersetzt, welcher in Block 212 im Zuge einer kryptographischen Anwendung verwendet wird. Beispielsweise kann der Code, falls dessen Erzeugung auf einem Zufallsprinzip beruht, als Zufallszahl verwendet werden. Eine solche Zufallszahl kann beispielsweise als Seed für eine kryptographische Schlüsselerzeugung oder als Salt zur Entropieerhöhung einer Einwegfunktion verwendet werden. Der Code kann beispielsweise als ein kryptographischer Schlüssel genutzt werden. Der Code kann beispielsweise ein Geheimtext bzw. Chiffrat eines Datensatzes darstellen, bei welchem das Quantencomputersystem die verwendete Verschlüsselungsfunktion implementiert. Ferner kann der Code ein Ergebnis einer auf einen Datensatz angewendete Einwegfunktion darstellen, welche das Quantencomputersystem implementiert. Eine solche Einwegfunktion kann beispielsweise im Zuge eine Authentifizierungsverfahrens oder im Zuge einer Integritätsprüfung des entsprechenden Datensatzes zum Einsatz kommen.

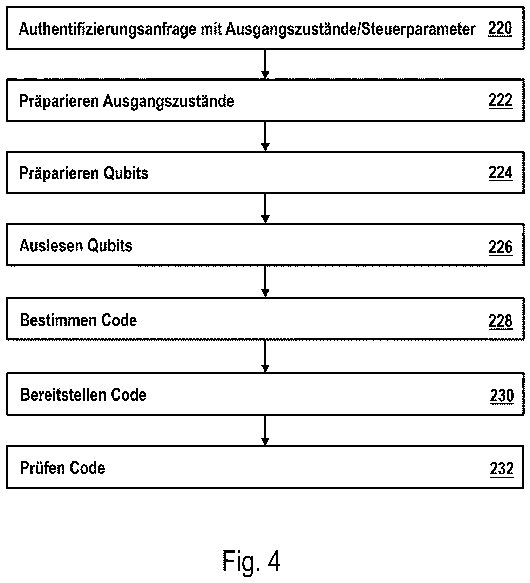

Figur 4 zeigt ein exemplarisches Verfahren zum Verwenden eines Quantencomputersystems für ein Authentifizierungsverfahren. Ein erstes Computersystem bzw. ein erster Teilnehmer authentifiziert ein zweites Computersystem bzw. einen zweiten Teilnehmer unter Verwendung eines Quantencomputersystems, welches sich im Besitz des zweiten Teilnehmers befindet und/oder auf welches der zweite Teilnehmer Zugriff besitzt. In Block 220 empfängt das zweite Computersystem eine Authentifizierungsanfrage von dem ersten Computersystem. Diese Authentifizierungsanfrage identifiziert beispielsweise zu verwendete Ausgangszustände und/oder Steuerungsparameter. Diese Angaben der zu verwendete Ausgangszustände und/oder Steuerungsparameter dienen beispielsweise als Challenge eines im Zuge der bzw. zum Zwecke der Authentifizierung ausgeführten Challenge-Response-Verfahrens. In Block 222 bringt das zweite Computersystem unter Verwendung einer Steuerungs- und einer Präparierungsvorrichtung des Quantencomputersystems die Qubits in die vorgegebenen Ausgangszuständen. In Block 224 werden die Qubits von dem zweiten Computersystem unter Verwendung der Steuerungs- und der Präparierungsvorrichtung des Quantencomputersystems unter Verwendung der vorgegebenen Steuerparameter präpariert.

In Block 226 werden die Qubits von dem zweiten Computersystem unter Verwendung der Steuerungs- und einer Auslesevorrichtung des Quantencomputersystems ausgelesen. In Block 228 wird das Ausleseergebnis von dem zweiten Computersystem unter Verwendung der Steuerungsvorrichtung in einen digitalen Code übersetzt, welchen das zweite Computersystem dem ersten Computersystem in Block 230 bereitstellt. Beispielsweise sendet das zweite Computersystem dem ersten Computersystem den Code in Antwort auf die Authentifizierungsanfrage, etwa als Response im Zuge eines Challenge-Response-Verfahrens. Die Kommunikation zwischen dem ersten und zweiten Computersystem und/oder zwischen dem zweiten Computersystem und dem Quantencomputersystem kann beispielsweise verschlüsselt, etwa unter Verwendung einer Ende-zu-Ende-Verschlüsselung erfolgen. In Block 232 empfängt das erste Computersystem den Code und prüft diesen. Falls der Code mit einem in einem Speicher des ersten Computersystems hinterlegten Referenzwert übereinstimmt ist die Authentifizierung des zweiten Computersystems durch das erste Computersystem erfolgreich. Beispielsweise bestätigt das erste Computersystem eine erfolgreiche Authentifizierung gegenüber dem zweiten Computersystem.

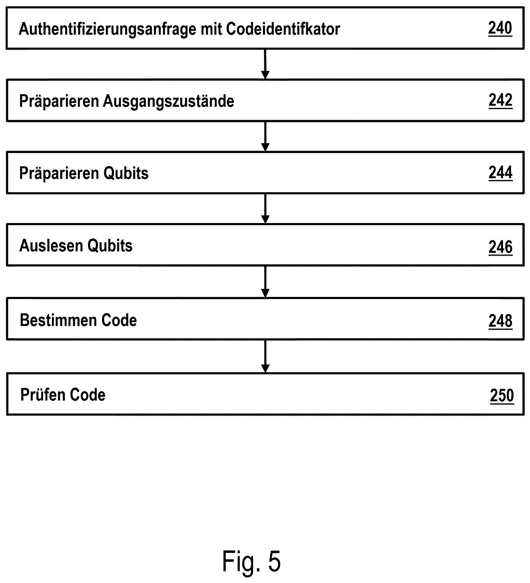

Figur 5 zeigt ein weiteres exemplarisches Verfahren zum Verwenden eines Quantencomputersystems für ein Authentifizierungsverfahren. Ein erstes Computersystem bzw. ein erster Teilnehmer authentifiziert ein zweites Computersystem bzw. einen zweiten Teilnehmer unter Verwendung eines Quantencomputersystems. Das Quantencomputersystem befindet sich beispielsweise im Besitz eines unabhängigen dritten Teilnehmers. Das erste und zweite Computersystem haben beispielsweise über ein Netzwerk, wie etwa das Internet, Zugriff auf das Quantencomputersystem. In Block 240 empfängt das zweite Computersystem eine Authentifizierungsanfrage von dem ersten Computersystem. Diese Authentifizierungsanfrage identifiziert beispielsweise einen mit dem Quantencomputer zu erzeugenden Code, welcher zum Zwecke der Authentifizierung bereitzustellen ist. In Block 242 bringt das zweite Computersystem unter Verwendung einer Steuerungs- und einer Präparierungsvorrichtung des Quantencomputersystems die Qubits in Ausgangszustände. In Block 244 werden die Qubits von dem zweiten Computersystem unter Verwendung der Steuerungs- und der Präparierungsvorrichtung des Quantencomputersystems präpariert. Bei den hierfür verwendeten Steuerparametern handelt es sich beispielsweise um ein Geheimwissen, mittels dessen sich das zweite Computersystem gegenüber dem ersten Computersystem authentifiziert. Bei den in Block 242 erzeugten Ausgangszuständen kann es sich ebenfalls um einen Teil des Geheimwissens handeln oder um Standardeinstellungen.

In Block 246 greift das erste Computersystem auf das Quantencomputersystem zu und liest die Qubits unter Verwendung der Steuerungs- und einer Auslesevorrichtung des Quantencomputersystems aus. Vorher wird das erste Computersystem beispielsweise von dem zweiten Computersystem oder von dem Quantencomputersystem über das Präparieren bzw. das bevorstehende Präparieren und ein mögliches Auslesen informiert. Alternativ erfolgt das Auslesen der Qubits durch das Quantencomputersystem automatisch. Beispielsweise auf eine entsprechende vorhergestellte Anfrage des ersten und/oder zweiten Computersystems hin. In Block 248 wird das Ausleseergebnis unter Verwendung der Steuerungsvorrichtung in einen digitalen Code übersetzt, welchen das erste Computersystem, etwa über das Netzwerk, empfängt. In Block 250 prüft das erste Computersystem diesen Code. Falls der Code mit einem in einem Speicher des ersten Computersystems hinterlegten Referenzwert übereinstimmt ist die Authentifizierung des zweiten Computersystems durch das erste Computersystem erfolgreich. Beispielsweise bestätigt das erste Computersystem eine erfolgreiche Authentifizierung gegenüber dem zweiten Computersystem.

Die Offenbarung umfasst ferner ohne Einschränkung und rein beispielhaft die folgenden Merkmalskombinationen:
1. Verfahren zum Verwenden eines Quantencomputersystems, welcher eine Mehrzahl von Qubits umfasst, für eine kryptographische Anwendung, wobei das Verfahren im Zuge des Ausführens der kryptographischen Anwendung umfasst:
   Präparieren mehrere der Qubits in jeweils individuellen Zwischenzuständen, wobei zum Präparieren der Qubits eine Präparierungsvorrichtung des Quantencomputersystems verwendet wird, welche unter Verwendung eines Satzes von ein oder mehreren Steuerparametern gesteuert wird,
   Auslesen der präparierten Qubits,
   Verwenden des Ausleseergebnisses der präparierten Qubits als Code für die kryptographische Anwendung.
2. Verfahren nach Merkmalskombination 1, wobei die Qubits initial jeweils in einem Ausgangszustand präpariert werden, wobei es sich bei den Ausgangszuständen der Qubits um eindeutig definierte Eigenzustände handelt.
3. Verfahren nach Merkmalskombination 2, wobei es sich bei den Ausgangszuständen der Qubits um eine Codierung eines Datensatzes handelt, auf welchen die kryptographische Anwendung angewendet wird.
4. Verfahren nach einer der Merkmalskombinationen 1 bis 2, wobei das Quantencomputersystem als Zufallszahlengenerator verwendet wird, wobei es sich bei den Steuerparametern des Satzes von ein oder mehreren Steuerparametern um zufällig ausgewählte Steuerparameter handelt und wobei der Code als Zufallswert zum Bereitstellen einer Zufallszahl für die kryptographische Anwendung verwendet wird.
5. Verfahren nach einer der Merkmalskombinationen 1 bis 2, wobei es sich bei dem Quantencomputersystem um einen Schlüsselgenerator zur Erzeugung eines kryptographischen Schlüssels handelt, wobei es sich bei den Steuerparametern des Satzes von ein oder mehreren Steuerparametern um zufällig ausgewählte Steuerparameter handelt und wobei der Code als kryptographischer Schlüssel verwendet wird.
6. Verfahren nach Merkmalskombination 5, wobei im Zuge eines Vereinbarens des kryptographischen Schlüssels Angaben zu verwendenden Steuerparametern des Satzes von ein oder mehreren Steuerparametern und/oder der zu verwendenden Ausgangszuständen der Qubits zum Erzeugen des kryptographischen Schlüssels bereitgestellt werden.
7. Verfahren nach einer der Merkmalskombinationen 1 bis 2, wobei eine Abbildung der Steuerparameter des Satzes von ein oder mehreren Steuerparametern auf das Ausleseergebnis der präparierten Qubits charakteristisch für das Quantencomputersystem ist, wobei es sich bei der kryptographischen Anwendung um ein Authentifizierungsverfahren handelt, wobei ein erster Teilnehmer einen zweiten Teilnehmer des Authentifizierungsverfahrens unter Verwendung des Codes authentifiziert.
8. Verfahren nach Merkmalskombination 7, wobei dem ersten Teilnehmer der aus vorgegebenen Ausgangszuständen der Qubits und einem vorgegebenen Satz von ein oder mehreren Steuerparametern resultierende Code bekannt ist, wobei der zweite Teilnehmer sich im Besitz des Quantencomputersystems befindet und den Besitz zum Zwecke des Authentifizierungsverfahrens durch ein Senden des Codes, welcher unter Verwendung der vorgegebenen Ausgangszuständen der Qubits und des vorgegebenen Satz von ein oder mehreren Steuerparametern erzeugt wird, an den ersten Teilnehmer nachweist.
9. Verfahren nach Merkmalskombination 7, wobei dem ersten Teilnehmer der aus vorgegebenen Ausgangszuständen der Qubits und einem vorgegebenen Satz von ein oder mehreren Steuerparametern resultierende Code bekannt ist, wobei das Quantencomputersystem von einem unabhängigen dritten Teilnehmer bereitgestellt wird, wobei der zweite Teilnehmer sein Wissen über die vorgegebenen Ausgangszuständen der Qubits und/oder einem vorgegebenen Satz von ein oder mehreren Steuerparametern zum Zwecke des Authentifizierungsverfahrens durch das Präparieren der Qubits unter Verwendung der vorgegebenen Ausgangszuständen der Qubits und des vorgegebenen Satz von ein oder mehreren Steuerparametern nachweist, wobei der erste Teilnehmer zum Prüfen des Nachweises die präparierten Qubits ausliest.
10. Verfahren nach einer der Merkmalskombinationen 1 bis 3, wobei die kryptographische Anwendung ein Verschlüsseln eines Datensatzes umfasst, wobei es sich bei den Ausgangszuständen der Qubits um die Codierung des zu verschlüsselnden Datensatzes handelt, wobei die Steuerparameter des Satzes von ein oder mehreren Steuerparametern als kryprographischer Schlüssel verwendet werden und wobei es sich bei dem resultierenden Code um den verschlüsselten Datensatz handelt.
11. Verfahren nach einer der Merkmalskombinationen 1 bis 3, wobei die kryptographische Anwendung ein Anwenden einer Einwegfunktion auf einen Datensatz umfasst, wobei es sich bei den Ausgangszuständen der Qubits um die Codierung des Datensatzes handelt, auf welchen die Einwegfunktion anzuwenden ist, wobei die Steuerparameter des Satzes von ein oder mehreren Steuerparametern als Salt für die Einwegfunktion verwendet werden und wobei es sich bei dem resultierenden Code um das Ergebnis der Anwendung der Einwegfunktion auf den Datensatz handelt.
12. Quantencomputersystem, welches eine Mehrzahl von Qubits umfasst und dazu konfiguriert ist im Zuge eines Ausführens einer kryptographischen Anwendung folgendes Verfahren auszuführen:
   Präparieren mehrere der Qubits in jeweils individuellen Zwischenzuständen, wobei zum Präparieren der Qubits eine Präparierungsvorrichtung des Quantencomputersystems verwendet wird, welche unter Verwendung eines Satzes von ein oder mehreren Steuerparametern gesteuert wird,
   Auslesen der präparierten Qubits,
   Verwenden des Ausleseergebnisses der präparierten Qubits als Code für die kryptographische Anwendung.

### Bezugszeichenliste

- 100: Quantencomputersystem
- 101: System
- 102: Qubits
- 104: Präparationsvorrichtung
- 106: Auslesevorrichtung
- 108: Steuervorrichtung
- 110: Speicher
- 112: Prozessor
- 114: Programminstruktionen
- 116: Kommunikationsschnittstelle
- 120: erstes Computersystem
- 122: Speicher
- 124: Prozessor
- 126: Programminstruktionen
- 128: Kommunikationsschnittstelle
- 130: zweites Computersystem
- 132: Speicher
- 134: Prozessor
- 136: Programminstruktionen
- 138: Kommunikationsschnittstelle
- 140: Netzwerk

## Patentansprüche

1. Verfahren zum Verwenden eines Quantencomputersystems (100), welcher eine Mehrzahl von Qubits (102) umfasst, für eine kryptographische Anwendung, wobei das Verfahren im Zuge des Ausführens der kryptographischen Anwendung umfasst:
Präparieren mehrere der Qubits (102) in jeweils individuellen Zwischenzuständen, wobei zum Präparieren der Qubits (102) eine Präparierungsvorrichtung (104) des Quantencomputersystems (100) verwendet wird, welche unter Verwendung eines Satzes von ein oder mehreren Steuerparametern gesteuert wird,
Auslesen der präparierten Qubits (102),
Verwenden des Ausleseergebnisses der präparierten Qubits (102) als Code für die kryptographische Anwendung,
wobei es sich bei dem Quantencomputersystem (100) um einen Schlüsselgenerator zur Erzeugung eines kryptographischen Schlüssels handelt, wobei es sich bei den Steuerparametern des Satzes von ein oder mehreren Steuerparametern um zufällig ausgewählte Steuerparameter handelt und wobei der Code als kryptographischer Schlüssel verwendet wird.

2. Verfahren nach Anspruch 1, wobei die Qubits (102) initial jeweils in einem Ausgangszustand präpariert werden, wobei es sich bei den Ausgangszuständen der Qubits (102) um eindeutig definierte Eigenzustände handelt.

3. Verfahren nach einem der vorangehenden Ansprüche, wobei es sich bei dem kryptographischen Schlüssel um einen symmetrischen Schlüssel handelt.

4. Verfahren nach einem der vorangehenden Ansprüche, wobei im Zuge eines Vereinbarens des kryptographischen Schlüssels Angaben zu verwendenden Steuerparametern des Satzes von ein oder mehreren Steuerparametern und/oder der zu verwendenden Ausgangszuständen der Qubits (102) zum Erzeugen des kryptographischen Schlüssels bereitgestellt werden.

5. Verfahren nach Anspruch 4, wobei im Zuge des Vereinbarens des kryptographischen Schlüssels das zur Schlüsselerzeugung zu verwendende Quantencomputersystem (100) identifiziert wird.

6. Verfahren nach Anspruch 5, wobei ein erster Teilnehmer, der von den für die Erzeugung des kryptographischen Schlüssels zu verwendenden Steuerparametern und/oder der zu verwendenden Ausgangszuständen der Qubits (102) Kenntnis hat, einem zweiten Teilnehmer die Angaben zur Schlüsselerzeugung mitteilt, wobei das zur Schlüsselerzeugung zu verwendende Quantencomputersystem (100) von einem unabhängigen dritten Teilnehmer bereitgestellt wird, welcher einen Zugriff auf das Quantencomputersystem (100) für den ersten und zweiten Teilnehmer über ein Netzwerk bereitstellt, wobei der erste Teilnehmer auf das von dem dritten Teilnehmer bereitgestellte Quantencomputersystem (100) zugreift und den kryptographischen Schlüssel erzeugt, wobei der zweite Teilnehmer durch die von dem ersten Teilnehmer mitgeteilten Angaben in die Lage versetzt wird, ebenfalls auf das identifizierte, von dem dritten Teilnehmer bereitgestellte Quantencomputersystem (100) zuzugreifen und den zu verwendenden kryptographischen Schlüssel unter Verwendung der Angaben zu den zu verwendenden Steuerparametern und/oder zu den zu verwendenden Ausgangszuständen der Qubits (102) zu erzeugen.

7. Verfahren nach einem der vorangehenden Ansprüche, wobei es sich bei dem Schlüsselgenerator um einen nicht klonbaren Schlüsselgenerator handelt, wobei die durch das Quantencomputersystem (100) bereitgestellte Funktion zur Erzeugung des kryptographischen Schlüssels aufgrund von individuellen Hardwareeigenschaften des Quantencomputersystems (100) charakteristisch für das individuelle Quantencomputersystem (100) ist.

8. Quantencomputersystem (100), welches eine Mehrzahl von Qubits (102) umfasst und dazu konfiguriert ist im Zuge eines Ausführens einer kryptographischen Anwendung folgendes Verfahren auszuführen:
Präparieren mehrere der Qubits (102) in jeweils individuellen Zwischenzuständen, wobei zum Präparieren der Qubits (102) eine Präparierungsvorrichtung (104) des Quantencomputersystems (100) verwendet wird, welche unter Verwendung eines Satzes von ein oder mehreren Steuerparametern gesteuert wird,
Auslesen der präparierten Qubits (102),
Verwenden des Ausleseergebnisses der präparierten Qubits (102) als Code für die kryptographische Anwendung,
wobei es sich bei dem Quantencomputersystem (100) um einen Schlüsselgenerator zur Erzeugung eines kryptographischen Schlüssels handelt, wobei es sich bei den Steuerparametern des Satzes von ein oder mehreren Steuerparametern um zufällig ausgewählte Steuerparameter handelt und wobei der Code als kryptographischer Schlüssel verwendet wird.
